# EUROPÄISCHE PATENTANMELDUNG

(11) **EP 3 009 414 A1**
(43) Veröffentlichungstag der Anmeldung: **20.04.2016**
(21) Anmeldenummer: 14189187.9
(22) Anmeldetag: 16.10.2014
(51) Int. Cl.: C04B 20/12, C23C 18/31, C23C 18/52, C04B 20/02, C04B 20/10

(54) **Doppelhybridmaterial, Verfahren zu seiner Herstellung und Verwendung**

(71) Anmelder: MIG Material Innovative Gesellschaft mbH, 33154 Salzkotten (DE)
(72) Erfinder: Bonder, Wolfgang, 33154 Salzkotten (DE); Brandt, Burkhard, 331o6 Paderborn (DE); Akin, Enver, Dr., 331o4 Paderborn Sennelager (DE)
(74) Vertreter: Gulde & Partner

(57) **Zusammenfassung**

Die Erfindung betrifft ein Doppelhybridmaterial, seine Verwendung und ein Verfahren zur Herstellung eines Doppelhybridmaterials umfassend ein anorganisches Material, eine oder mehrere organische Komponenten und eine metallische Komponente, das dadurch gekennzeichnet ist, dass ein poröses anorganisch/organisches Hybridmaterial bereitgestellt wird, dessen anorganisches Material und organische Komponente(n) kovalent oder durch Wechselwirkungen verbunden sind, und auf dem Hybridmaterial aus einer Metallsalzlösung in Gegenwart eines Reduktionsmittels ein oder mehrere Metalle abgeschieden werden, oder auf einem porösen anorganischen Material aus einer Metallsalzlösung in Gegenwart eines Reduktionsmittels ein oder mehrere Metalle abgeschieden werden und danach eine oder mehrere organische Komponenten auf das anorganische Material aufgebracht werden.

## Beschreibung

Die vorliegende Erfindung betrifft ein hoch leistungsfähiges anorganisch-organisches Doppelhybridmaterial, das ein anorganisches Material, eine oder mehrere organische Komponenten und eine metallische Komponente umfasst sowie seine Verwendung. Die Erfindung betrifft auch ein einfaches und kostengünstiges Verfahren zur Herstellung eines solchen Materials.

"Trockene, warme und ruhige Wohnungen können nur entstehen, wenn das Mauerwerk zum Wasserdampftransport von der Innen- zur Außenluft befähigt ist und Fußböden, Wände und Decken ausreichenden Wärme- und Schallschutz gewährleisten" (Werner Spillhagen, Zum Entwurf eines Hygienischen Memorandums, in: "neue bauwelt" Heft 25, 1949).

Bereits 1949 meldeten sich Hygieniker mit solchen Aussagen zu Wort und forderten eine Bauweise, die mit der Gesundheit und Behaglichkeit der betroffenen Menschen in Einklang zu bringen ist. Ein Wärme-, Brand- oder Schallschutz sollte hierbei in Hinblick auf Nachhaltigkeit und Wirtschaftlichkeit mit möglichst geringem Ressourcenverbrauch erstellt werden. Eine Wiederverwendung von Baustoffen würde hierbei die nachhaltigste Form der Baustoffauswahl darstellen. Mit den jetzigen Dämmsystemen, die auf organischen Materialien basieren, kann keiner der o. g. Punkte zufriedenstellend realisiert werden, sondern es entstehen eher Entsorgungsprobleme, toxische Gase im Brandfall und starke Schimmelbildung im Fall von Kältebrücken.

Aus der Patentliteratur sind viele Ansätze zum Ersatz herkömmlicher Dämmsysteme bekannt, besonders im Zusammenhang mit Materialien aus Glas und IR-reflektierenden Pigmenten. Hierzu zählen DE 10350579 A1, EP 1111144 A1, EP 149958 A1, EP 1180649 A1 und DE 10 2010 038005 A1.

Ein weiteres Problem stellt die Isolierung der Bauten gegen Feuchtigkeit dar. Feuchtigkeit kann eine große Menge an Energie aufnehmen und diese durch Stoffe transportieren. Eine Wärmedämmung stellt lediglich eine zeitliche Verzögerung des Wärmegradienten dar und ist somit ein passives System zur Isolierung von Bauten. 4% Feuchtigkeit in einem Dämmsystem verringern die Dämmwirkung bereits um 50%. Feuchtigkeit begünstigt außerdem auch Schimmelbefall. Nicht zuletzt werden an ein Dämmmaterial auch bestimmte Anforderungen in Bezug auf seine Atmungsaktivität gestellt.

Bis dato werden in erster Linie die Fassaden, das Dach oder die Decken eines Gebäudes mit Dämmstoffen, die eine relativ geringe spezifische Wärmeleitfähigkeit λ aufweisen, von außen bzw. von innen, von beiden Seiten und/oder im Kern ausgestattet, um den Durchgang der Wärmemenge durch die Außenflächen des Gebäudes zu reduzieren.

Wärme kann hierbei über drei verschiedene Wege übertragen werden: Wärmeleitung. Wärmestrahlung und thermische Konvektion. Ein Dämmstoff sollte idealerweise mehrere Dämmeigenschaften bzw. Funktionen in sich vereinen. Eine Veränderung der chemischen oder physikalischen Eigenschaften der verbauten Materialien wird hierbei in den meisten Fällen nicht vorgenommen.

Literaturbekannt und in der Praxis bereits angewendet ist die Hydrophobierung von Bauelementen zur Verhinderung des kapillaren Wassertransports. Durch diese Maßnahme werden neben der verbesserten Wärmedämmung (weniger Kapillarwasser und damit auch weniger Wärmetransport durch Wasser) weniger Frostschäden und weniger biologischer Bewuchs, z. Bsp. durch Algen, Flechten und Pilze, der Baumaterialien beobachtet. Durch die geringere Menge an Wasser in den Kapillaren verringert sich auch die Menge an Salzen und Schadstoffen im Mauerwerk, die gewöhnlich mit dem Wasser in das Mauerwerk transportiert werden.

Durch eine gezielte chemische / physikalische Änderung der Baumaterialien können deren Eigenschaften bezüglich Wärme- und Feuchtigkeitsmanagement innerhalb und außerhalb des Gebäudes gezielt gesteuert werden.

Aufgabe der vorliegenden Erfindung war es, ein anorganisch-organisches Doppelhybridmaterial und ein Verfahren zu seiner Herstellung bereitzustellen, das die Nachteile des Standes der Technik überwindet. Mit dem Doppelhybridmaterial soll einerseits Energie (Heiz- und Kühlenergie) durch Reflektion von IR- und UV-Strahlung eingespart werden. Andererseits soll durch eine hohe Atmungsaktivität und die damit einhergehenden trockenen Wandbauten ein für den Wärmeschutz und die Raumluft positiv wirkender Effekt erreicht werden. In Kombination mit dem Mauerwerk soll das Doppelhybridmaterial ein aktives Isolationssystem für Bauwerke darstellen, welches sowohl nach innen als auch nach außen wirkt. Das Verfahren zur Herstellung des Materials soll einfach und kostengünstig sein.

Die Aufgabe der Erfindung wird durch das Herstellungsverfahren des Doppelhybridmaterials gemäß unabhängigem Anspruch 1 und mit dem Hybridmaterial der unabhängigen Ansprüche 12 und 13 gelöst. Die Unteransprüche stellen bevorzugte Ausführungsformen dar.

Erfindungsgemäß wird ein anorganisches Material zuerst mit einer oder mehreren organischen Verbindungen modifiziert und anschließend mit einem Metall oder dessen Verbindungen beschichtet. Die Reihenfolge der Modifikation kann auch umgekehrt sein, je nachdem welche Eigenschaft des resultierenden Materials am Ende im Vordergrund stehen soll.

Das heißt, die Erfindung betrifft ein Verfahren zur Herstellung eines Doppelhybridmaterials umfassend ein anorganisches Material, eine oder mehrere organische Komponenten und eine metallische Komponente, das dadurch gekennzeichnet ist, dass
a) ein poröses anorganisch/organisches Hybridmaterial, dessen anorganisches Material und organische Komponente(n) kovalent oder durch Wechselwirkungen verbunden sind, bereitgestellt wird und auf dem Hybridmaterial aus einer Metallsalzlösung in Gegenwart eines Reduktionsmittels ein oder mehrere Metalle abgeschieden werden
   oder
b) auf einem porösen anorganischen Material aus einer Metallsalzlösung in Gegenwart eines Reduktionsmittels ein oder mehrere Metalle abgeschieden werden und danach eine oder mehrere organische Komponenten auf das anorganische Material aufgebracht werden.

Als poröses anorganisch/organisches Hybridmaterial nach Ausführungsvariante a) des erfindungsgemäßen Verfahrens können allgemein bekannte, sog. einfache, Hybridmaterialien eingesetzt werden. Solche Materialien sind beispielsweise organisch modifizierte Schichtsilicate.

Die Herstellung des porösen anorganisch/organischen (einfachen) Hybridmaterials, das das Ausgangsmaterial der Ausführungsvariante a) des erfindungsgemäßen Verfahrens ist, kann nach allgemein in der Literatur bekannten Verfahren erfolgen. Je nachdem, ob in dem resultierenden einfachen Hybridmaterial nichtkovalente Wechselwirkungen, wie z. B. Wasserstoffbrückenbindungen, Van-der-Waals-Wechselwirkungen oder elektrostatische Kräfte, herrschen oder kovalente Bindungen zwischen der organischen und der anorganischen Komponente vorliegen, unterscheidet man die Hybridmaterialien grob in zwei Klassen. In Hybridmaterialien der Klasse I sind die Komponenten über nichtkovalente Bindungen miteinander verknüpft. Enthält das anorganische Material funktionelle Gruppen, können diese mit organischen Verbindungen mit funktionellen Resten, Monomeren, Oligomeren oder Polymeren zur Reaktion gebracht werden, woraus kovalente Bindungen resultieren, die ein charakteristisches Merkmal für Hybridmaterialien der Klasse II sind.

In einer bevorzugten Ausführungsform der vorliegenden Erfindung wird das poröse anorganisch/organische Hybridmaterial, das als Ausgangsmaterial des Schrittes a) des Verfahrens der Erfindung dient, durch Umsetzung eines funktionelle Gruppen, insbesondere Hydroxygruppen, aufweisenden anorganischen Materials mit einer oder mehreren organischen Komponenten hergestellt, deren funktionelle Reste mit denen des anorganischen Materials kovalente Bindungen eingehen können. Als zum Teil Hydroxygruppen aufweisendes anorganisches Material werden erfindungsgemäß insbesondere Glimmer, Zement (in und nach der Hydratationsphase), Kieselgur, Montmorillonit, amorphe Glaspartikel, insbesondere amorphe Glashohlkügelchen, oder Mischungen aus zwei oder mehreren dieser Materialien eingesetzt.

Gemäß der Erfindung können als anorganisches Material generell Gesteine, Mineralien, (künstliche) Silikate, Reisschalenasche, Kieselsäuren oder amorphe Glasstrukturen in Betracht gezogen werden.

Insbesondere ist das poröse anorganische Material der vorliegenden Erfindung ausgewählt aus der Gruppe umfassend Kieselgel, Kieselgur, (synthetische) Silikate wie z. B. synthetisches Calciumsilikat, Amphibole, Talkum, Kaolin, Attaclay, Zement, Kalkstein, Kalk, Kreide, Löß, Ton, Dolomit, Diatomeenerde, Attapulgite, Montmorillonit, Bentonit, vulkanische Aschen, Glimmer, Vermiculite, Kieselsäuren wie z. B. synthetische oder amorphe Kieselsäuren, Reisschalenasche und amorphe Glasstrukturen, oder Mischungen aus zwei oder mehreren dieser Materialien.

Als organische Komponenten können erfindungsgemäß alle in der Literatur bekannten Monomere, Oligomere und Polymere eingesetzt werden, die über eine oder mehrere funktionelle Gruppen verfügen und eine Verknüpfung mit dem anorganischen Material möglich machen. Die funktionellen Gruppen der organischen Komponenten sind erfindungsgemäß bevorzugt ausgewählt aus Hydroxygruppen, Alkoxygruppen, Aminogruppen, Sulfongruppen, Carboxygruppen oder aus zwei oder mehreren unterschiedlichen Gruppen daraus.

Insbesondere kann als organische Komponente eine organische Siliziumverbindung, ein oder mehrere gesättigte Kohlenwasserstoffe, eine teilweise oder vollständig halogenierte Verbindung, ein natürliches oder synthetisches Wachs oder Fett, ein Harz, eine Fettsäure oder ein Fettsäurederivat, ein Mineralöl oder ein Pflanzenöl oder eine Mischung aus zwei oder mehreren dieser Komponenten eingesetzt werden.

Als organische Siliziumverbindung wird erfindungsgemäß bevorzugt eine Verbindung der allgemeinen Formel X₂Y₂Si verwendet, wobei Y Alkoxy, Aryloxy, Aralkoxy, Carboxylato, Ketoximyl, Mercaptan, Halogen und/oder Pseudohalogen bedeutet und X Alkyl, Alkoxy, Aryloxy, Aralkoxy, Carboxylato, Ketoximyl, Mercaptan, Halogen und/oder Pseudohalogen bedeutet. Ganz besonders bevorzugt wird erfindungsgemäß ein Siloxan, z. B. ein Polysiloxan, vorzugsweise Poly(dimethylsiloxan) oder Carboxyamid-Polysiloxan, oder ein Silan, z. B. Alkoxysilan, vorzugsweise Methoxy-oder Ethoxysilan, eingesetzt.

Als gesättigte Kohlenwasserstoffe werden solche mit einer Molekülkettenlänge von jeweils C₁₈-C₇₅ eingesetzt, vorzugsweise solche mit Kettenlängen von C₁₈-C₃₂ oder Mischungen daraus. Als teilweise oder vollständig halogenierte Verbindung kommen insbesondere halogenierte Kohlenwasserstoffe in Frage, bevorzugt fluorierte oder perfluorierte Kohlenwasserstoffe, oder deren Mischungen.

Als Wachs kann ein natürliches tierisches oder pflanzliches und/oder synthetisches Wachs eingesetzt werden, z. B. Montanwachs oder Paraffinwachs. Als Harz kommt insbesondere Silikonharz in Frage, ganz besonders Methylsilikonharz.

Als Fettsäuren kommen erfindungsgemäß solche mit 8 bis 22 C-Atomen in Frage. Als Fettsäurederivate werden erfindungsgemäß die Derivate dieser genannten Fettsäuren eingesetzt, insbesondere deren Metallseifen, deren Amide sowie bevorzugt deren Ester. Insbesondere kommen deren Ester mit einwertigen Alkoholen mit 1 bis 14 C-Atomen, mit Glykol, mit Polyglykol, mit Polyalkylenglykol, mit Glycerin, mit Mono-, Di- oder Triethanolamin, mit Monosacchariden oder mit Polyhydroxyverbindungen in Frage. Besonders bevorzugt kommt Fettsäuremethylester zur Anwendung.

Als Mineralöl wird erfindungsgemäß bevorzugt Weißöl eingesetzt. Als Pflanzenöl kann vorzugsweise Tungöl (sog. chinesisches Holzöl) eingesetzt werden.

Erfindungsgemäß kann zum Beispiel die Anwesenheit von Hydroxylgruppen auf den mineralischen Oberflächen zur kovalenten Anbindung eines reaktiven Silanols mittels einer Kondensationsreaktion genutzt werden. Die reaktiven Silanole werden hierbei in situ aus hydrolysierbaren Silane mittels Feuchtigkeit hergestellt. Als hydrolysierbare funktionelle Gruppen verwendet man bei Silanen Alkoxygruppen (meist Methoxy- und Ethoxy- Substituenten).

Die Silanole können neben der Reaktion mit dem anorganischen Material auch mit sich selbst oder mit (an)organischen Polymeren reagieren, so dass sie mit ihrer brückenbildenden Eigenschaft verschiedene Materialien miteinander kombinieren können. In Folge dessen verbessert sich auch die Kompatibilität der unterschiedlichen Materialien (organisch / anorganisch, polar / unpolar) untereinander.

In einer vorteilhaften Ausführungsform der Herstellung des Doppelhybridmaterials der vorliegenden Erfindung kann das gemäß Schritt b) des erfindungsgemäßen Verfahrens hergestellte Metall-beschichtete anorganische Material mit einer Emulsion, die ein Alkoxysilan und ein Organosiloxan beinhaltet, in Kontakt gebracht werden. Das Verhältnis Alkoxysilan : Organosiloxan beträgt vorzugsweise von 0,5:1 bis 20:1, insbesondere von 1:1 bis 10:1.

In einer anderen vorteilhaften Ausführungsform des erfindungsgemäßen Verfahrens kann das gemäß Schritt b) des Verfahrens hergestellte Metall-beschichtete anorganische Material mit alkoxyliertem Fettsäuremethylester umgesetzt werden, gegebenenfalls bei Anwesenheit eines Beschleunigers (z. B. einem Imidazolderivat).

In noch einer anderen vorteilhaften Ausführungsform des erfindungsgemäßen Verfahrens kann das gemäß Schritt b) des Verfahrens hergestellte Metall-beschichtete anorganische Material mit einer Emulsion, die Methylsilikonharz, Polydimethylsiloxan und Fettsäuremethylester enthält, in Kontakt gebracht werden. Das Verhältnis Methylsilikonharz : Polydimethylsiloxan : Fettsäuremethylester beträgt vorzugsweise 1:1:1.

Das erfindungsgemäße Verfahren zur Herstellung des Doppelhybridmaterials sieht die Beschichtung des anorganischen Materials (Schritt b)) bzw. des einfachen Hybridmaterials (Schritt a)) mit dem gewünschten Metall durch chemische Fällung des Metalls aus einer Metallsalzlösung unter Zuhilfenahme eines Reduktionsmittels vor.

In einer bevorzugten Ausführungsform der Erfindung wird die Metallabscheidung unter alkalischen Bedingungen vorgenommen. Vorzugsweise erfolgt die Metallabscheidung bei Umgebungstemperatur (15-28°C). Je nach gewünschter Reaktionsgeschwindigkeit ist es auch möglich, die Metallbeschichtung bei höheren Temperaturen bis 100°C durchzuführen.

Als metallische Komponente können alle Metalle des Periodensystems der Elemente, ihre Verbindungen und Mischungen unterschiedlicher Metalle aufgeführt werden.

Bevorzugt enthält die eingesetzte Metallsalzlösung ein oder mehrere Metallsalze ausgewählt aus Nitraten, Sulfaten, Halogeniden, insbesondere Chloriden, Alkoholaten, Acetaten, Citraten, oder deren Hydrate. Bei der Metallsalzlösung handelt es sich vorzugsweise um eine wässrige oder wässrig/alkoholische Lösung. Aber ebenso können auch weitere Lösemittel zur Verdünnung eingesetzt werden, wenn gewährleistet ist, dass der Wirkstoff in die Oberflächenporen der Matrix eindringen kann.

Insbesondere enthält die eingesetzte Metallsalzlösung ein Metallsalz, oder zwei oder mehrere Metallsalze mit jeweils unterschiedlichen Metallen, wobei die Metalle ausgewählt sind aus der Gruppe bestehend aus Aluminium, Kupfer, Silber, Gold, Nickel, Kobalt, Eisen, Mangan, Chrom, Zink, Zinn, Blei oder Titan, vorzugsweise Kupfer, Nickel, Aluminium, Silber oder Gold.

Das eingesetzte Reduktionsmittel ist erfindungsgemäß bevorzugt ausgewählt aus der Gruppe umfassend Aldehyde, Hydride wie z. B. Natriumborhydrid, reduzierende Zucker, vorzugsweise Glucose, Fructose, Galactose, Maltose oder Lactose, Hydrazin oder Hypophosphit wie z.B. Natriumhypophosphit.

In einer besonders bevorzugten Ausführungsform der Erfindung werden als Reduktionsmittel Formaldehyd, Glucose oder Hypophosphit eingesetzt.

Das erfindungsgemäße Verfahrens zur Herstellung eines Doppelhybridmaterials ist nicht nur einfach und kostengünstig, es erlaubt auch die Herstellung von Produkten mit maßgeschneiderten Eigenschaften für die verschiedensten Anwendungsgebiete, je nach eingesetztem anorganischen Material, organischer und Metallkomponente

Gegenstand der vorliegenden Erfindung ist auch das mit dem erfindungsgemäßen Verfahren hergestellte Doppelhybridmaterial.

Ein weiterer Gegenstand der vorliegenden Erfindung ist ein Doppelhybridmaterial umfassend 1 bis 99 Gew.% anorganisches Material, 0,01 bis 99 Gew.% einer organischen Komponente, 0,00001- 40 Gew.% einer metallischen Komponente, letztere vorzugsweise ausgewählt aus einem oder mehreren Metallen oder Halbmetallen oder einem Metallkomplex, und bis zu 5 Gew% Hilfsstoffe, wobei die Prozentangaben auf das Gesamtgewicht des Doppelhybridmaterials bezogen sind und anorganisches Material, organische Komponente, metallische Komponente und Hilfsstoffe 100 Gew.% ergeben.

In einer Ausführungsform der Erfindung umfasst das Doppelhybridmaterial maximal 95 Gew.% anorganisches Material, vorzugsweise maximal 92,5 Gew.%, besonders bevorzugt maximal 90 Gew.%, bezogen auf das Gesamtgewicht des Doppelhybridmaterials. Der hohe Gehalt an solchen anorganischen Materialien ermöglicht die ökonomische Herstellung von Doppelhybridmaterialien mit einem geringen Gehalt an organischen und metallischen Komponenten.

In einer anderen Ausführungsform der Erfindung umfasst das Doppelhybridmaterial 0,01 bis 90 Gew.% einer organischen Komponente, vorzugsweise 0,5 bis 45 Gew.%, besonders bevorzugt 0,5 bis 12,5 Gew.%, bezogen auf das Gesamtgewicht des Doppelhybridmaterials.

In einer weiteren Ausführungsform der Erfindung umfasst das Doppelhybridmaterial 0,01 bis 20 Gew.% einer metallischen Komponente, vorzugsweise 0,05 bis 20 Gew.%, besonders bevorzugt 0,1 bis 12,5 Gew.%, bezogen auf das Gesamtgewicht des Doppelhybridmaterials.

Hilfsstoffe sind zu maximal 5 Gew%, vorzugsweise zu maximal 3 Gew%, insbesondere von 0,5-3Gew% in den Doppelhybridmaterialien enthalten. Bei solchen Hilfsstoffen kann es sich beispielsweise um Lösungsmittel, feste Trägerstoffe, oberflächenaktive Stoffe (wie Solubilisatoren, Schutzkolloide, Netzmittel und Haftmittel), Klumpungsmittel, organische und anorganische Verdicker, Bakterizide, Frostschutzmittel, Entschäumer oder Farbstoffe handeln.

Gegenstand der vorliegenden Erfindung ist auch die Verwendung des erfindungsgemäß hergestellten Doppelhybridmaterials, das fest sein kann oder eine pastöse oder flüssige Masse darstellen kann, als Additiv für mineralische Baustoffe wie z. B. Mauersteine, Mörtel, Putze und anorganische Dämmstoffe, für Baubeschichtungen, für Holz und für Dispersionsfarben.

Eine Dispersionsfarbe umfassend das Doppelhybridmaterial ist ebenfalls Gegenstand der vorliegenden Erfindung.

Das Doppelhybridmaterial der Erfindung kann aber auch direkt auf die Fassade, die Innenwände oder Decken aufgebracht werden, um IR- und UV-Strahlung zu reflektieren, zur Wärmedämmung oder zur Verhinderung von Schimmelbefall oder anderem biologischen Bewuchs.

Nachfolgend wird die vorliegende Erfindung an Beispielen näher erläutert, ohne sie darauf einzuschränken.

### Beispiel 1:

Zu 100g Kieselgur (oder dem daraus hergestellten einfachen Hybridmaterial mit 19 Gew.% alkoxyliertem Fettsäuremethylester, bezogen auf die Trockenmasse des Kieselgurs) in 300 ml Wasser werden 10 g NaOH gegeben. Der resultierenden Lösung fügt man 20 ml einer 5%-igen (Gew.%) CuSO₄-Lsg. zu. Anschließend gibt man als Reduktionsmittel 10 ml einer 30%-igen Formaldehydlösung (Gew.%) hinzu.

CuSO₄ + 2HCHO + 4NaOH ⇄ Cu⁰ + Na₂SO₄ + 2NaHCOO + 2H₂O + H₂↑

Das reduzierte Kupfer scheidet sich ab und lagert sich an das Kieselgur an.

Je nach gewünschter Reaktionsgeschwindigkeit kann die Temperatur der Reaktion bei Raumtemperatur belassen oder die Reaktion bei einer höheren Temperatur von 40 bis 95°C durchgeführt werden.

Zur Hydrophobierung des stark saugenden Kieselgurs können auch Emulsionen (mit 0,003 bis 25 Gew.% bezogen auf die Trockenmasse des Kieselgurs) eingesetzt werden, die sowohl Alkoxysilane als auch Organosiloxane aufweisen, vorzugsweise im Verhältnis Alkoxysilane : Organosiloxane von 0,5 : 1 bis 20 : 1, insbesondere 1 : 1 bis 10 : 1.

### Beispiel 2

Zu 100g Glimmer (oder dem daraus hergestellten einfachen Hybridmaterial gemäß Beispiel 4) in 250 ml Wasser werden 10 g NaOH gegeben. Der resultierenden Lösung fügt man 20 ml einer 5%-igen (Gew.%) NiSO₄-Lsg. zu. Anschließend gibt man als Reduktionsmittel 10 ml einer 40%-igen Natriumhypophosphit-Lösung (Gew.%) hinzu.

2NaH₂PO₂ + 4NaOH + NiSO₄ ⇄ Ni⁰ + 2Na₂HPO₃ + 2Na₂SO₄ + 2H₂O + H₂↑

Das Nickel wird hierbei reduziert und scheidet sich elementar an den Glimmer ab.

150 g des mit Nickel modifizierten Glimmers werden mit 100 g Wasser versetzt. Dem Gemisch setzt man unter Rühren 0,5 bis 12 g alkoxylierten Fettsäuremethylester zu. Je nach Bedarf und eingesetztem Beschleuniger (z. Bsp. Imidazolderivat) und dessen Konzentration kann die Reaktion bezüglich selektiver Bindung und Reaktionszeit gesteuert werden.

### Beispiel 3

Zu 100g Glashohlkügelchen (oder zu dem daraus hergestellten einfachen Hybridmaterial gemäß Beispiel 5) in 350 ml Wasser werden 20 ml einer 3%-igen (Gew.%) AgNO₃-Lsg. gegeben. Der resultierenden Lösung fügt man 10 ml einer 45%-igen NaOH-Lsg. zu. Bei dem Alkalisieren der Silbernitrat-Lösung entsteht festes, braunes Silberoxid, das sich durch Zugabe von Ammoniak oder einer ammoniakalischen Lösung unter Ausbildung eines Silberdiamin-Komplexes wieder auflöst. Anschließend gibt man als Reduktionsmittel 10 ml einer 50%-igen (Gew.%) Glucose-Lösung hinzu.

2[Ag(NH₃)₂]⁺ + R-CHO + H₂O + 3NaOH ⇄ 2Ag⁰ + R-COONa + 2H₂O + 2NH₃ + 2Na⁺

Es bildet sich elementares Silber, das sich auf das Substrat abscheidet.

150 g der mit Silber modifizierten Glashohlkügelchen werden mit 0,5 bis 20 g einer 45%-igen Emulsion einer Mischung aus Methylsilikonharz, Polydimethylsiloxan und Fettsäuremethylester in einem Verhältnis 1:1:1 umgesetzt. Anschließend erfolgt eine Trocknung des Produktes.

### Beispiele für die Herstellung einfacher Hybridmaterialien

### Beispiel 4

150 g Glimmer werden mit 100 g Wasser versetzt. Dem Gemisch setzt man unter Rühren 0,5 bis 12 g alkoxylierten Fettsäuremethylester zu. Je nach Bedarf und eingesetztem Beschleuniger (z. B. Imidazolderivat) und dessen Konzentration kann die Reaktion bezüglich selektiver Bindung und Reaktionszeit gesteuert werden.

### Beispiel 5

150 g amorphe Glaspartikel, die bevorzugt Hohlräume aufweisen, werden mit 0,003 bis 25 Gew.%, bezogen auf die Trockenmasse der Glaspartikel, eines Carboxyamid-Polysiloxans (Dynamische Viskosität 95 mPa·s bei 20°C) besprüht. Das Gemisch wird für ein bis zwei Stunden auf 50-60°C erwärmt.

### Beispiel 6

150 g Zement werden mit 0,003 bis 45 Gew.%, bezogen auf die Trockenmasse des Zementes, eines Alkoxysilans oder einer daraus hergestellten Emulsion unter Rühren besprüht.

## Patentansprüche

1. Verfahren zur Herstellung eines Doppelhybridmaterials umfassend ein anorganisches Material, eine oder mehrere organische Komponenten und eine metallische Komponente, **dadurch gekennzeichnet, dass**
a) ein poröses anorganisch/organisches Hybridmaterial bereitgestellt wird, dessen anorganisches Material und organische Komponente(n) kovalent oder durch Wechselwirkungen verbunden sind, und auf dem Hybridmaterial aus einer Metallsalzlösung in Gegenwart eines Reduktionsmittels ein oder mehrere Metalle abgeschieden werden
oder
b) auf einem porösen anorganischen Material aus einer Metallsalzlösung in Gegenwart eines Reduktionsmittels ein oder mehrere Metalle abgeschieden werden und danach eine oder mehrere organische Komponenten auf das anorganische Material aufgebracht werden.

2. Verfahren nach Anspruch 1, **dadurch gekennzeichnet, dass** die eingesetzte Metallsalzlösung ein oder mehrere Metallsalze, ausgewählt aus Nitraten, Sulfaten, Halogeniden, Alkoholaten, Acetaten, Citraten, oder deren Hydrate, enthält.

3. Verfahren nach Anspruch 1 oder 2, **dadurch gekennzeichnet, dass** die eingesetzte Metallsalzlösung ein Metallsalz, oder zwei oder mehrere Metallsalze mit jeweils unterschiedlichen Metallen, enthält, wobei die Metalle ausgewählt sind aus der Gruppe bestehend aus Aluminium, Kupfer, Silber, Gold, Nickel, Kobalt, Eisen, Mangan, Chrom, Zink, Zinn, Blei oder Titan, vorzugsweise Kupfer, Nickel, Aluminium, Silber oder Gold.

4. Verfahren nach einem der Ansprüche 1 bis 3, **dadurch gekennzeichnet, dass** das eingesetzte Reduktionsmittel ausgewählt ist aus der Gruppe umfassend Aldehyde, Hydride, reduzierende Zucker, Hydrazin oder Hypophosphit.

5. Verfahren nach einem der Ansprüche 1 bis 4, **dadurch gekennzeichnet, dass** das poröse anorganische Material ausgewählt ist aus der Gruppe umfassend Kieselgel, Kieselgur, (synthetische) Silikate, Amphibole, Talkum, Kaolin, Attaclay, Zement, Kalkstein, Kalk, Kreide, Löß, Ton, Dolomit, Diatomeenerde, Attapulgite, Montmorillonit, Bentonit, vulkanische Aschen, Glimmer, Vermiculite, Kieselsäure, Reisschalenasche und amorphe Glasstrukturen, oder Mischungen aus zwei oder mehreren dieser Materialien, vorzugsweise Glimmer, Zement, Kieselgur, Montmorillonit, amorphe Glashohlkügelchen, oder deren Mischungen.

6. Verfahren nach einem der Ansprüche 1 bis 5, **dadurch gekennzeichnet, dass** als organische Komponente eine organische Siliziumverbindung, ein oder mehrere gesättigte Kohlenwasserstoffe, eine teilweise oder vollständig halogenierte Verbindung, ein natürliches oder synthetisches Wachs oder Fett, ein Harz, eine Fettsäure oder ein Fettsäurederivat, ein Mineralöl, ein Pflanzenöl oder eine Mischung aus zwei oder mehreren dieser Komponenten eingesetzt wird.

7. Verfahren nach einem der Ansprüche 1 bis 6, **dadurch gekennzeichnet, dass** das poröse anorganisch/organische Hybridmaterial hergestellt wird durch Umsetzung eines funktionelle Gruppen, insbesondere Hydroxygruppen, aufweisenden anorganischen Materials mit einer oder mehreren organischen Komponenten mit funktionellen Gruppen, die mit den funktionellen Gruppen des anorganischen Materials kovalente Bindungen eingehen.

8. Doppelhybridmaterial, hergestellt nach einem der Ansprüche 1 bis 7.

9. Doppelhybridmaterial umfassend
1 bis 99 Gew.% anorganisches Material,
0,01 bis 99 Gew.% einer organischen Komponente,
0,00001-40 Gew.% einer metallischen Komponente
und bis zu 5 Gew% Hilfsstoffe,
wobei die Prozentangaben auf das Gesamtgewicht des Doppelhybridmaterials bezogen sind und anorganisches Material, organische Komponente, metallische Komponente und Hilfsstoffe 100 Gew.% ergeben.

10. Doppelhybridmaterial nach Anspruch 9, umfassend maximal 95 Gew.% anorganisches Material, vorzugsweise maximal 92,5 Gew.%, besonders bevorzugt maximal 90 Gew.%, bezogen auf das Gesamtgewicht des Doppelhybridmaterials.

11. Doppelhybridmaterial nach Anspruch 9 oder 10, umfassend 0,01 bis 90 Gew.% einer organischen Komponente, vorzugsweise 0,5 bis 45 Gew.%, besonders bevorzugt 0,5 bis 12,5 Gew.%, bezogen auf das Gesamtgewicht des Doppelhybridmaterials.

12. Doppelhybridmaterial nach einem der Ansprüche 9 bis 11, umfassend 0,01 bis 20 Gew.% einer metallischen Komponente, vorzugsweise 0,05 bis 20 Gew.%, besonders bevorzugt 0,1 bis 12,5 Gew.%, bezogen auf das Gesamtgewicht des Doppelhybridmaterials.

13. Dispersionsfarbe umfassend das Doppelhybridmaterial gemäß einem der Ansprüche 8 bis 12.

14. Verwendung des Doppelhybridmaterials nach einem der Ansprüche 8 bis 12 als Additiv für mineralische Baustoffe, Baubeschichtungen, Holz oder Dispersionsfarben.

15. Verwendung des Doppelhybridmaterials nach einem der Ansprüche 8 bis 12 zur direkten Aufbringung auf die Fassade, auf Innenwände oder Decken zur IR- und UV-Reflektion, zur Wärmedämmung oder zur Verhinderung von Schimmelbefall oder anderem biologischen Bewuchs.
